Europäisches Patentamt

European Patent Office

Office européen des brevets

(19)

(11) **EP 1 477 708 A1**

(12) **EUROPÄISCHE PATENTANMELDUNG**

(43) Veröffentlichungstag:
17.11.2004 Patentblatt 2004/47

(51) Int Cl.⁷: **F16H 55/18**

(21) Anmeldenummer: 03010877.3

(22) Anmeldetag: **15.05.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(71) Anmelder: **Eisenbeis, Uwe**
**80809 München (DE)**

(72) Erfinder: **Eisenbeis, Uwe**
**80809 München (DE)**

(54) **Vorrichtung zum Ausgleich des Zahnflankenspiels bei Stirnradgetrieben**

(57)   Das in der Zeichnung dargestellte Zahnrad (2) treibt das Zahnrad (3) im Gegenuhrzeigersinn an. Das an Bauteil 3 mittels den Schrauben (4) festverschraubte Verspannelement (1) verspannt dabei Zahnrad (3) mit Zahnrad (2) in Drehrichtung (siehe beigefügte Zeichnungen). Der Bereich des Umformteils der sich direkt auf dem Zahnrad (2) abwälzt entspricht bei Variante 1 genau der Zahnradevolvente (Bild 1.1 - 1.5). Die Varianten zwei und drei besitzen eine als Kunststoffzahnkranz dargestellte komplette Verzahnung. Bei diesen Varianten können die Zähne auch nur zur "Hälfte" ausgeführt werden, analog zur Variante 1 wird die verspannte Seite als Zahnevolvente ausgeführt. Das Verspannelement (1) zentriert sich hierbei auf dem Zahnrad (3).

Das Verspannmoment ergibt sich hierbei aus der Geometrie der Nabe mit den Speichen, sowie dem verwendeten Werkstoff. In folgendem Auslegungsbeispiel unter Punkt 2.2 wird bei Variante 1 (Bild 1.3) die Nabe um das Maß "c" verdreht, woraus sich dann aus der Speichengeometrie in Verbindung mit den Werkstoffeigenschaften das resultierende Moment ergibt. Auch könnte man am Bauteil (1) bei allen Varianten Langlöcher für die Verschraubung (4) anbringen und dieses erst beim Einbau mittels eines Drehmomentwerkzeuges verspannen, was immer eine genau definierte Verspannung bewirken würde.

Durch diese Verspannung wird das Zahnflankenspiel, welches vorwiegend durch Achsabstandsvergrößerung bei Erwärmung des Motor/Getriebegehäuses entsteht, eliminiert und das "Klappern" verhindert. Das "Klappern" tritt besonders bei Verbrennungsmotoren auf, da diese durch die Kurbeltriebkinematik und durch die Verbrennungsvorgänge immer mit großen Wechseldrehmomenten aufwarten.

Variante 1
Verspannrad als Federblechumformteil

Variante 1
Verspannrad
als Blechumformteil

2:1

Bild 1.5

**Beschreibung**

Das in der Zeichnung dargestellte Zahnrad (2) treibt das Zahnrad (3) im Gegenuhrzeigersinn an. Das an Bauteil 3 mittels den Schrauben (4 ) festverschraubte Verspannelement (1) verspannt dabei Zahnrad (3) mit Zahnrad (2) in Drehrichtung (siehe beigefügte Zeichnungen).

Der Bereich des Umformteils der sich direkt auf dem Zahnrad (2) abwälzt entspricht bei Variante 1 genau der Zahnradevolvente (Bild 1.1 - 1.5). Die Varianten zwei und drei besitzen eine als Kunststoffzahnkranz dargestellte komplette Verzahnung (Bild 2.1 - 3.4). Bei diesen Varianten können die Zähne auch nur zur "Hälfte" ausgeführt werden (Bild 4.1 - 4.3), analog zur Variante 1 wird die verspannte Seite als Zahnevolvente ausgeführt. Das Verspannelement (1) zentriert sich hierbei auf dem Zahnrad (3).

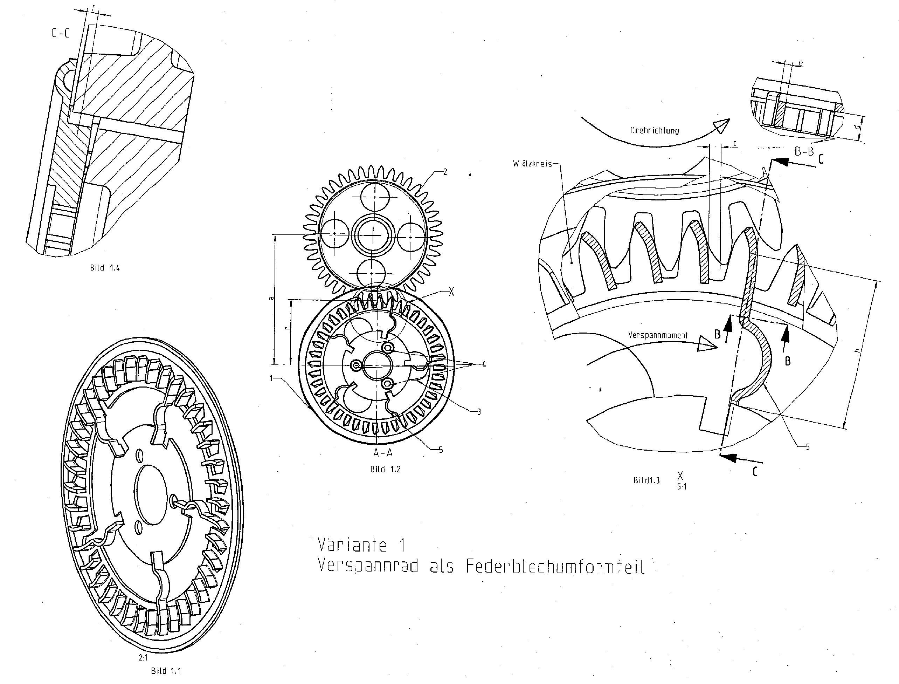

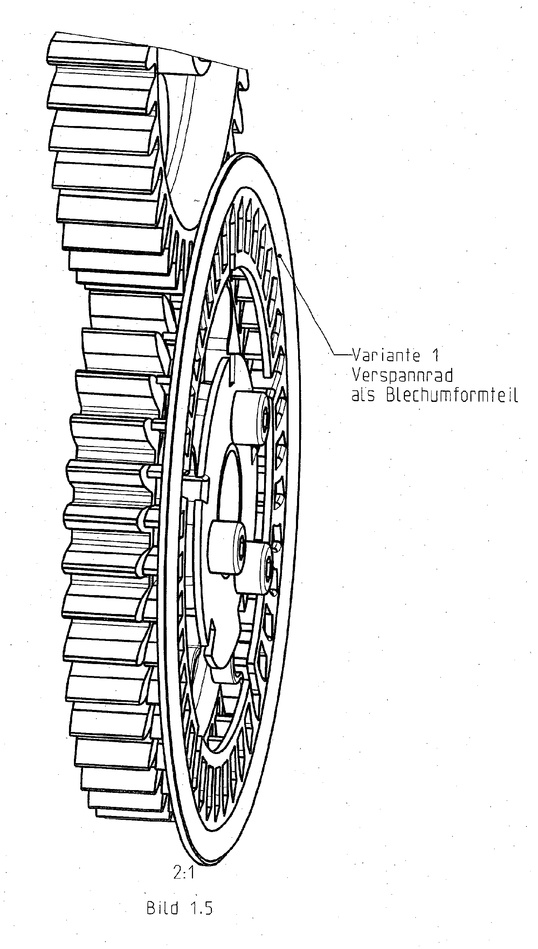

Das Verspannmoment ergibt sich hierbei aus der Geometrie der Nabe mit den Speichen, sowie dem verwendeten Werkstoff. In folgendem Auslegungsbeispiel unter Punkt 2.2 wird bei Variante 1 (Bild 1.1-1.4) die Nabe um das Maß "c" verdreht, woraus sich dann aus der Speichengeometrie in Verbindung mit den Werkstoffeigenschaften das resultierende Moment ergibt. Auch könnte man am Bauteil (1) bei allen Varianten Langlöcher für die Verschraubung (4) anbringen und dieses erst beim Einbau mittels eines Drehmomentwerkzeuges verspannen, was immer eine genau definierte Verspannung bewirken würde.

Durch diese Verspannung wird das Zahnflankenspiel, welches vorwiegend durch Achsabstandsvergrößerung bei Erwärmung des Motor/Getriebegehäuses entsteht, eliminiert und das "Klappern" verhindert. Das "Klappern" tritt besonders bei Verbrennungsmotoren auf, da diese durch die Kurbeltriebkinematik und durch die Verbrennungsvorgänge immer mit großen Wechseldrehmomenten aufwarten.

2.1. Varianten

Variante 1 (Bild 1.1 - 1.5)

Dieses aus Federstahl umgeformte Blechteil (1) kann sowohl einteilig als auch mehrteilig ausgeführt werden, wobei hier nur eine einteilige Variante dargestellt wurde. Auf Grund der hohen Festigkeit von Federstahl ist es unter Umständen notwendig einzelne Bereiche vor der Umformung laserzuschneiden. Allerdings wird die Umformung vor der finalen Wärmebehandlung durchgeführt bei der der Werkstoff seine eigentlichen Federeigenschaften erhält, d.h. je nach Werkstoff sind die Federstähle zu diesem Zeitpunkt noch relativ gut umformbar. Für diesen Anwendungsfall eignen sich vor allem Werkstoffe die ihre Federeigenschaften nicht durch die Kaltumformung, sondern durch eine entsprechende Wärmebehandlung bekommen.

Ein eventueller Nachteil bei Variante 1 könnte lediglich ein durch die Zahnflankenabwälzung des Zahnrades (2) auf dem Federblech (1) entstehendes eigenes Geräusch sein. Dieses könnte dann aber durch Aufvulkanisieren einer Gummischicht auf das Verspannelement (1) verhindert werden.

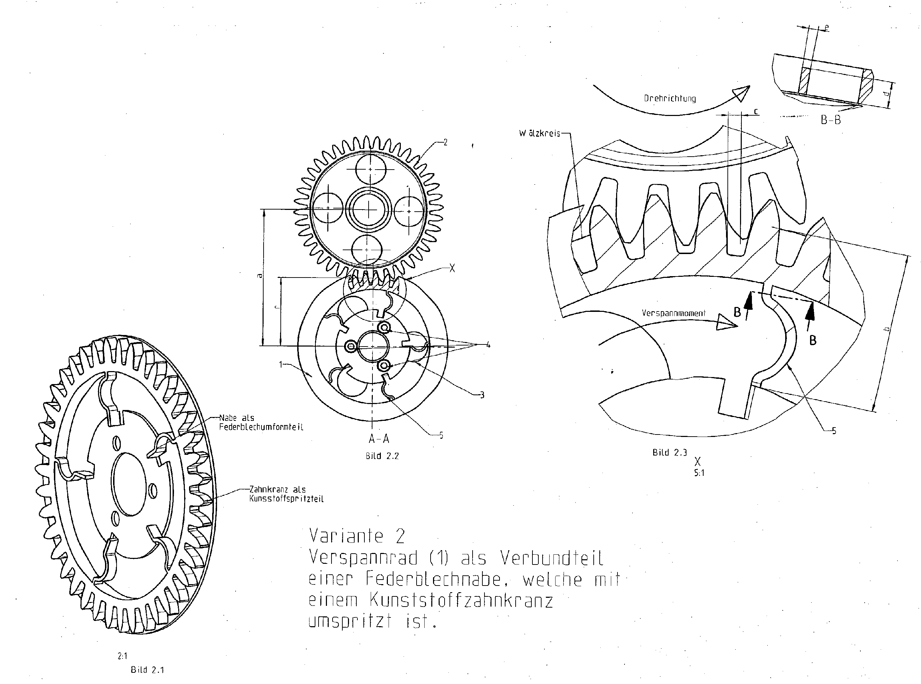

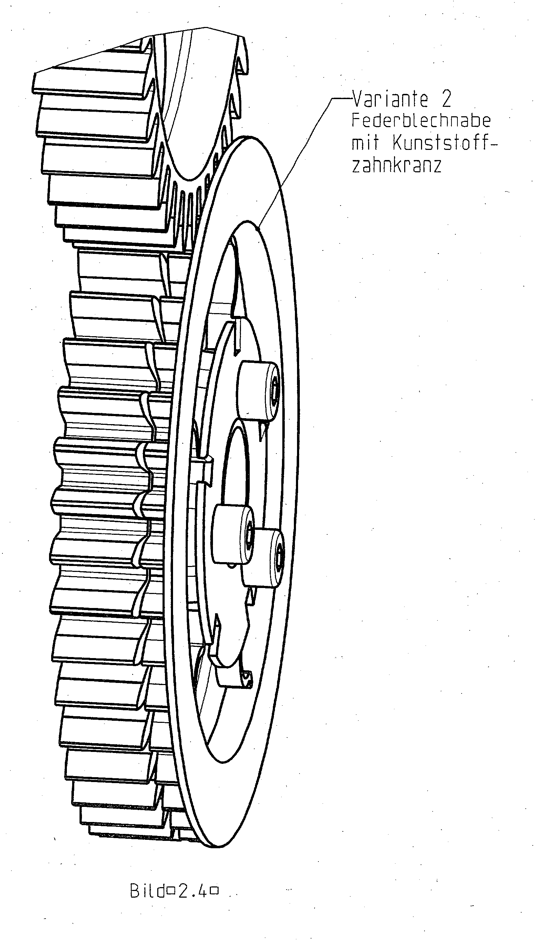

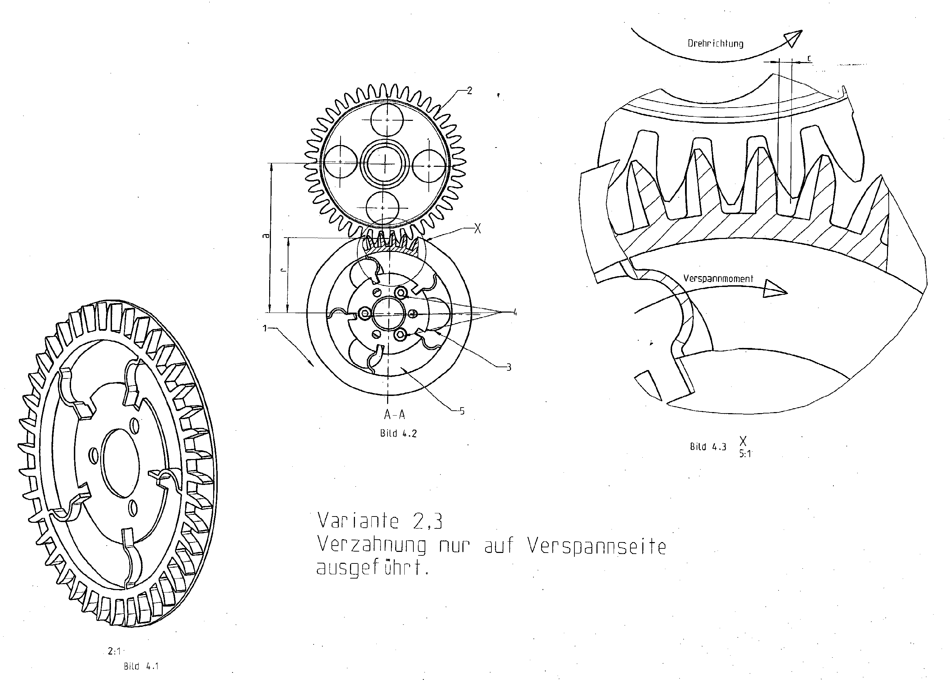

Variante 2 (Bild 2.1 - 2.4)

Eine weitere Ausführung des Verspannrades (1) ist als Verbundteil einer Federblechnabe und einem Zahnkranz aus Kunststoff möglich (Zeichnung 2). Hierbei wird die Federblechnabe wieder durch Umformen / Stanzen / Laserschneiden hergestellt, danach die Wärmebehandlung durchgeführt und schließlich das Blechteil mit einem Kunststoffzahnkranz umspritzt. Diese Anordnung besitzt bezüglich des Geräuschverhaltens wohl das größte Potential, da der Kunststoff eine zusätzliche "dämpfende" Wirkung hat.

Auch wäre ein gestanzter Zahnkranz denkbar, welcher mittels einer Federblechanbindung am Zahnrad (3) befestigt würde.

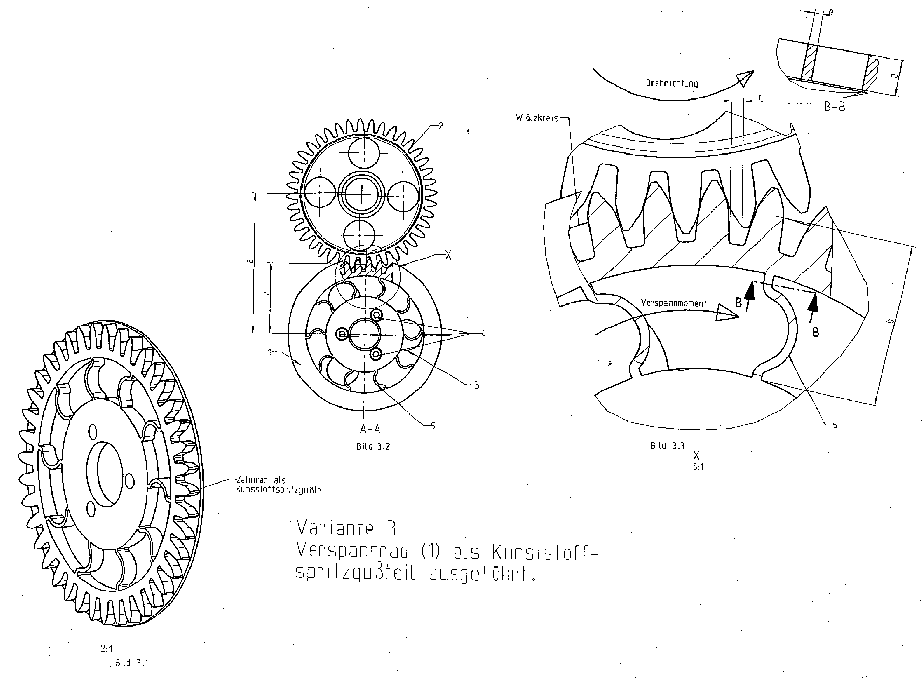

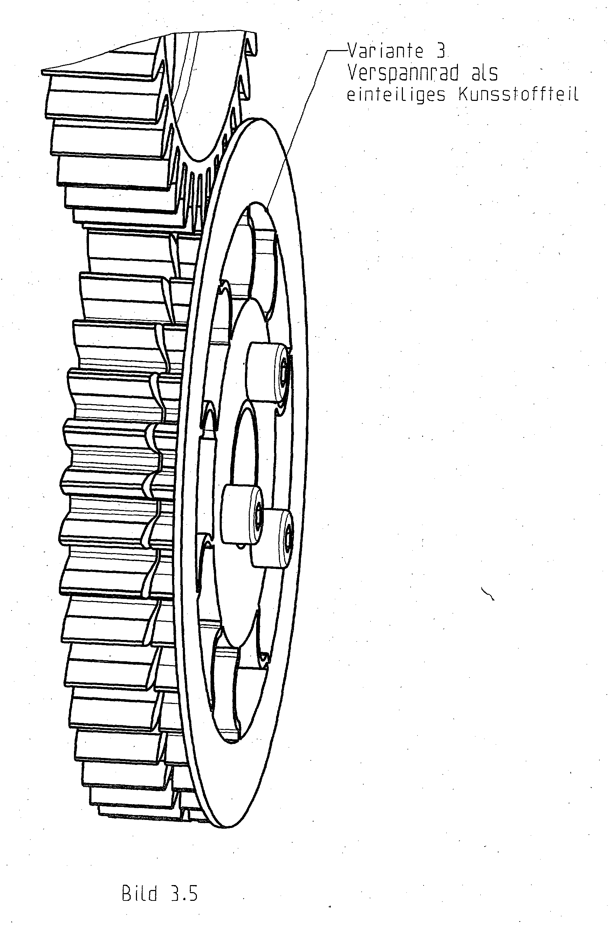

Variante 3 (Bild 3.1 - 3.4)

Weiterhin wäre eine Lösung denkbar, bei welcher das komplette Verspannelement (1) als

Kunststoffrad ausgeführt wird (Zeichnung 3). Allerdings ist hierbei das nachlassende Verspannmoment bei höheren Temperaturen unter Umständen ein Problem. Auch müsste das Verspannrad dann werkstoffoptimiert gestaltet werden. Die hier aufgeführten Darstellungen sind lediglich Funktionsanordnungen und keine Detailkonstruktionen.

Die Vorteile dieser Varianten gegenüber klassischen Verspannvorrichtungen sind zum einen die sehr viel günstigere Herstellung und zum anderen ein nicht unbeträchtlicher Gewichtsvorteil.

2.2..Auslegungsbeispiel

In diesem Beispiel soll ein durchaus übliches Verspannmoment von 3 Nm an einem Stirnradgetriebe mit zwei gleich großen Zahnrädern mit folgenden Daten dargestellt werden:

- Wälzkreisradius r = 39mm
- Speichenzahl z = 5
- Speichenlänge b = 18.2 mm
- Speichenbreite d = 3mm
- Blechdicke e = 1 mm

    Das Maß c stellt im verspannten Zustand (Bild 1.3) den Abstand von der Nulllage des

Federblechrades zur Einbaulage verspannt dar. Daraus ergibt sich multipliziert mit der Anzahl der Speichen das Verspannmoment.

$$M_{Verspann} = F * r \Rightarrow F = \frac{M_{Verspann}}{r * z} = \frac{3 * 10^3 Nmm}{39 mm * 5} = 15,39 N$$

Diese Kraft erzeugt dann über den Hebelarm "b" mit 18,2mm eine entsprechende Durchbiegung der Speiche, aus der das Maß "c" resultiert. Natürlich ist dieses nur eine angenäherte Rechnung, da es sich bei der Speiche schließlich um keinen Kragträger wie hier einfacherhalber angenommen handelt. Für eine grundlegende Rechnung dürfte dieses aber ausreichen.

Die Kraft "F" verursacht dann im Fuß der Speiche eine Biegebelastung welche wiederum in einer Biegespannung resultiert, die für den Werkstoff ertragbar sein muß.

$$M_{Speiche} = 25.64 N * 18.4 * 10^{-3} \, m \approx 0.28 Nm$$

$$Wb = \frac{d * e^2}{6} = \frac{3mm * 1^3 mm^2}{6} = 0.5 mm^3 = Biegewiders \tan dsmoment$$

$$\sigma_b = \frac{M_{Speiche}}{Wb} = \frac{0.28 * 10^3 \, Nmm}{0.5 mm^3} = 566 N/mm^2$$

$$I = \frac{d * e^3}{12} = \frac{3mm * 1 mm^3}{12} = 0.25 mm^4 = Flächenträgheitsmoment$$

$$E = 1.95 * 10^5 N/mm^2$$

$$c = \frac{M_{Speiche} * b^2}{2 * E * I} = \frac{0.5 * 10^3 Nmm * 18.2^2 mm^2 * mm^2}{2 * 1.95 * 10^5 N * 0.25 mm^4} \approx 1.0 mm$$

Die hieraus resultierende Biegespannung von 566 MPa ist für Federblechwerkstoffe wie z.B. X7CrNiA117-7 oder X10CrNi18-8 ohne Probleme ertragbar, da diese nach entsprechender Wärmebehandlung bis zu 1900 MPa Zugfestigkeit erreichen können. Auch die dabei erreichbare Werkstoffhärte von bis zu 500 HV ist für Verschleißbeständigkeit absolut ausreichend. Auch bei den Varianten 2 und 3 sollte es bezüglich der physikalischen Eigenschaften des Kunststoffmaterials keine Probleme geben, da es genügend Beispiele von Stirnradgetrieben mit Kunststoffverzahnungen gibt und immer nur als max. übertragbares Drehmoment das Verspannmoment z.B. hier 3 Nm übertragen werden muß.

Durch eine verbesserte Gestaltung der Speichen ("drehmomentoptimiert") kann die Belastung weiter reduziert oder das Verspannmaß "c" vergrößert werden, was eine größere Unempfindlichkeit gegen Toleranzschwankungen beim Verspannmoment durch Bearbeitung / Positionierung / Befestigung bringen würde.

Das Verspannmoment und das Maß "c" können durch Parameter wie Blechdicke, Umformgrad und Ändern der "Speichengeometrie" beeinflusst werden.

## EP 1 477 708 A1

**Patentansprüche**

1. Ausgleich des Zahnflankenspiels bei Stirnradgetrieben durch Verwendung eines einteiligen Federblechrades nach Variante 1 (Bild 1.1 - 1.5). Dabei wird ein Verspannelement (1) mit dem anzutreibenden Zahnrad (3) verschraubt. Das treibende Zahnrad (2) ist breiter als das anzutreibende Zahnrad (3) und greift daher sowohl in das Zahnrad (3) als auch in das Verspannelement (1) ein. Hierbei wird Bauteil (1) um das Maß "c" relativ zu Zahnrad (3) in Drehrichtung verspannt (verdreht). Dadurch ergibt sich ein durch von den Werkstoffeigenschaften und der Bauteilgeometrie abhängiges Verspannmoment.

2. Vorrichtung nach 1., aber Bauteil (1) besteht nicht aus einem einzelnen Umformteil, sondern besteht aus mehreren einzelnen Umformsegmenten, welche durch Schweißen oder durch Umformungsfügen verbunden sind.

3. Vorrichtung nach 1., Ausführung nach Variante 2 (Bild 2.1 - 2.4), wobei die Nabe als Federblech ausgeführt wird und der Zahnkranz aus um die Nabe umspritztem Kunststoff besteht.

4. Vorrichtung nach 3., aber mit einem gestanzten Zahnkranz, welcher mittels eines Federblechs mit dem anzutreibenden Zahnrad (3) verbunden wird.

5. Vorrichtung nach 1., Ausführung nach Variante 3 (Bild 3.1 - 3.4), bei der das komplette Verspannrad aus Kunststoff besteht.

6. Ausführung nach 2,3,4,5 aber jeder Zahn des Verspannrades (1) wird nur zur Hälfte dargestellt (Bild 4.1 - 4.3), d. h. der Zahn hat nur auf der verspannten Seite eine Evolvente.

7. Speichen (5) nicht gerade ausgeführt, sondern zum Längenausgleich bei der relativen Verdrehung der Nabe zum Zahnkranz, mit einem Längenausgleichsbereich (hier als Bogen in den Speichen dargestellt) versehen, der diese Längenausdehnung ermöglicht.

8. Vorrichtung nach 1., aber zur Vermeidung von negativen akustischen Abwälzgeräuschen auf der Bauteilrückseite mit einer aufvulkanisierten Gummischicht versehen.

9. Vorrichtung nach 1.,2.,3.,4.,5. aber Verspannelement (1) mit zusätzlicher axialer Verspannung gegen Zahnrad (3) oder nur axialem unverspannten Anlauf an Bauteil 3.

10. Vorrichtung nach 1.-7. aber die Zentrierung des Verspannrades (1) erfolgt nicht im Nabenbereich sondern direkt im Bereich oder unterhalb Verzahnung des anzutreibenden Rades (3).

Variante 1
Verspannrad
als Blechumformteil

2:1

Bild 1.5

Drehrichtung

B-B

Wälzkreis

Verspannmoment

B

B

5

Bild 2.3

X
5:1

X

a

r

1

A-A
Bild 2.2

4

3

5

2

Nabe als
Federblechumformteil

Zahnkranz als
Kunststoffspritzteil

2:1
Bild 2.1

Variante 2
Verspannrad (1) als Verbundteil
einer Federblechnabe, welche mit
einem Kunststoffzahnkranz
umspritzt ist.

Variante 2
Federblechnabe
mit Kunststoffzahnkranz

Bild 2.4

Drehrichtung

Verspannmoment

Bild 4.3  X
5:1

Variante 2,3
Verzahnung nur auf Verspannseite
ausgeführt.

A-A
Bild 4.2

2:1  Bild 4.1

Drehrichtung

Wälzkreis

Verspannmoment

B-B

B

Bild 3.3

X 5:1

A-A

Bild 3.2

Variante 3
Verspannrad (1) als Kunststoffspritzgußteil ausgeführt.

Zahnrad als
Kunststoffspritzgußteil

Bild 3.1

2:1

Variante 3
Verspannrad als
einteiliges Kunsstoffteil

Bild 3.5

# EP 1 477 708 A1

| | Europäisches Patentamt | **EUROPÄISCHER RECHERCHENBERICHT** | | **Nummer der Anmeldung** EP 03 01 0877 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN<br>vol. 2000, no. 26,<br>1. Juli 2002 (2002-07-01)<br>-& JP 2001 263453 A (ASANO GEAR CO LTD),<br>26. September 2001 (2001-09-26)<br>* Zusammenfassung *<br>--- | 1,2,7,9 | F16H55/18 |
| X | US 1 486 423 A (ERICSON ANTON F)<br>11. März 1924 (1924-03-11)<br>* Abbildungen *<br>--- | 1,3,4 | |
| X | FR 979 448 A (BECOTE ANTOINE)<br>26. April 1951 (1951-04-26)<br>* Abbildungen *<br>--- | 1,3,4 | |
| X | FR 2 803 006 A (VALEO SYSTEMES ESSUYAGE)<br>29. Juni 2001 (2001-06-29)<br>* Abbildungen *<br>--- | 1,5,6 | |
| X | US 1 804 906 A (WEMP ERNEST E)<br>12. Mai 1931 (1931-05-12)<br>* Abbildungen *<br>--- | 1,8,10 | RECHERCHIERTE SACHGEBIETE (Int.Cl.7)<br><br>F16H |
| X | FR 2 783 586 A (VALEO SYSTEMES ESSUYAGE)<br>24. März 2000 (2000-03-24)<br>* Abbildungen *<br>--- | 1,5 | |
| X | PATENT ABSTRACTS OF JAPAN<br>vol. 2000, no. 21,<br>3. August 2001 (2001-08-03)<br>-& JP 2001 116115 A (NOK CORP),<br>27. April 2001 (2001-04-27)<br>* Zusammenfassung *<br>---<br><br>-/-- | 1,2,7,9 | |

Der vorliegende Recherchenbericht wurde für alle Patentansprüche erstellt

| Recherchenort | Abschlußdatum der Recherche | Prüfer |
|---|---|---|
| DEN HAAG | 9. Oktober 2003 | Goeman, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

EP 1 477 708 A1

Europäisches
Patentamt

EUROPÄISCHER RECHERCHENBERICHT

Nummer der Anmeldung

EP 03 01 0877

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 1997, no. 07, 31. Juli 1997 (1997-07-31) -& JP 09 089084 A (NEC CORP), 31. März 1997 (1997-03-31) * Zusammenfassung * | 1,5 | |
| X | US 4 577 525 A (MIYAKE TAKASHI  ET AL) 25. März 1986 (1986-03-25) * Abbildungen * | 1,10 | |
| X | US 1 755 945 A (ALEXANDRESCU ALEXANDER M) 22. April 1930 (1930-04-22) * Abbildungen * | 1,8 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 9. Oktober 2003 | Goeman, F |

**ANHANG ZUM EUROPÄISCHEN RECHERCHENBERICHT**
**ÜBER DIE EUROPÄISCHE PATENTANMELDUNG NR.**    EP 03 01 0877

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2003

| Im Recherchenbericht angeführtes Patentdokument | | Datum der Veröffentlichung | Mitglied(er) der Patentfamilie | | Datum der Veröffentlichung |
|---|---|---|---|---|---|
| JP 2001263453 | A | 26-09-2001 | KEINE | | |
| US 1486423 | A | 11-03-1924 | KEINE | | |
| FR 979448 | A | 26-04-1951 | KEINE | | |
| FR 2803006 | A | 29-06-2001 | FR | 2803006 A1 | 29-06-2001 |
| US 1804906 | A | 12-05-1931 | KEINE | | |
| FR 2783586 | A | 24-03-2000 | FR | 2783586 A1 | 24-03-2000 |
| JP 2001116115 | A | 27-04-2001 | KEINE | | |
| JP 09089084 5 | A | | KEINE | | |
| US 4577525 | A | 25-03-1986 | JP | 58109764 A | 30-06-1983 |
| US 1755945 | A | 22-04-1930 | KEINE | | |

EPO FORM P0461

Für nähere Einzelheiten zu diesem Anhang : siehe Amtsblatt des Europäischen Patentamts, Nr.12/82